# EUROPEAN PATENT SPECIFICATION

(11) **EP 3 930 969 B1**
(45) Date of publication and mention of the grant of the patent: **01.05.2024**
(21) Application number: 20713988.2
(22) Date of filing: 25.02.2020
(51) Int. Cl.: B25J 15/00, B25J 15/02, B25J 15/04, B31B 50/00, B31B 50/78, B25J 15/06, B31B 100/00, B31B 120/30

(54) **ROBOTIZED HANDLING ASSEMBLY**
ROBOTISIERTE HANDHABUNGSANORDNUNG
ENSEMBLE DE MANIPULATION ROBOTISÉ

(30) Priority: 26.02.2019 IT 201900002695
(43) Date of publication of application: 05.01.2022
(73) Proprietor: I.M.A. Industria Macchine Automatiche S.p.A, 40064 Ozzano dell'Emila (IT)
(72) Inventor: DI MAIO, Pierpaolo, 40064 Ozzano dell'Emilia (IT)
(74) Representative: Petraz, Gilberto Luigi
(86) International application number: PCT/IT2020/050041
(87) International publication number: WO 2020/174509

(56) References cited:
- EP-A1- 1 032 534
- EP-A2- 1 293 307
- WO-A1-2015/123128
- CN-A- 102 674 018
- CN-A- 109 279 090
- JP-A- H04 189 489
- JP-A- 2004 025 326
- JP-A- 2010 005 736
- JP-A- 2013 223 905
- JP-U- S6 094 486
- US-A1- 2019 047 158

## Description

### FIELD OF THE INVENTION

The present invention concerns a robotized handling assembly for handling objects such as, by way of example only, containers, packages, pharmaceutical articles or products such as blisters, sachets, bags, vials, bottles, syringes, needles.

In particular, the robotized handling assembly of the present invention is particularly suitable to handle packages, or blanks, and to shape them.

### BACKGROUND OF THE INVENTION

Automated systems for handling objects and articles are widely used in various sectors, such as for example the pharmaceutical, cosmetic or food sectors.

Examples of automated object handlers provided with gripping members for handling objects, in particular configured as jaws or suchlike, are described in patent documents CN 102674018 A, WO 2015/12318 A1, JP 2010005736 A, US 2019/047158 A1, JP S6094486 U, CN 109279090 A, EP 1.293.307 A2, EP

1.032.534 A1 and JP 2013223905 A. In particular, CN 109279090 discloses a robotic gripper comprising suction cups and rotating levers for shaping a package starting from a piece of flattened cardboard, but doesn't disclose a pair of handling jaws movable relative to each other. In addition, JP 2004025326 discloses a robotic gripper comprising a pair of handling jaws movable relative to each other, wherein one of the handling jaws comprises a suction cup and a rotatable lever, but this robotic gripper is not suitable for shaping a package starting from a piece of flattened cardboard.

Especially in the pharmaceutical sector, but not exclusively, there is often the need to handle, take, position and release objects such as containers, packages, pharmaceutical articles or products such as blisters, sachets, bags, vials, bottles, syringes, needles.

For example, it is known that one of the most complex operations that these automated systems have to perform is the operation of shaping a package starting from the same package in a flattened configuration, also called a flat blank.

In fact, in order to reduce storage space, but also to facilitate possible printing and operations for applying tags, stamps or labels, the packages are kept in the flattened configuration and stacked one on top of the other until the moment to shape them comes.

Typically, standard packages comprise walls connected to each other in order to form a parallelogram that can go from the flattened configuration, substantially two-dimensional, to the shaped configuration, substantially three-dimensional, when a thrust is applied to one of the edges.

The complexity of the operation to shape the packages derives from the fact that the packages in a flattened configuration are difficult to hold, both because they have substantially coplanar gripping points, and also because they are made of deformable or flexible materials such as paper and/or cardboard.

Furthermore, to avoid deformation of the packages, the thrust action to shape them can be performed only from one of the edges as above, this forcing the current automated systems to operate on packages that always have the same orientation making them, in practice, not very flexible, also due to possible format changes or different orientation of the flattened packages that are fed.

The packages, in fact, can have very different formats, that is, very different shapes and sizes, due to the objects they have to contain; however, current automated systems are not very flexible when it comes to a change in format. This forces to create a certain number of automated systems carefully designed to shape specific packages, or to carry out modification interventions of the automated system in order to adapt it to operate on new package formats.

This of course entails, on the one hand, high investment costs on automated systems, and on the other hand, a certain waste of time, given that the continuous modifications of the system require a calibration thereof, in order to avoid precision errors that can lead to non-compliance of the packages that have been shaped.

There is therefore the need to perfect a robotized handling assembly that can overcome at least one of the disadvantages of the state of the art.

In particular, one purpose of the present invention is to provide a robotized handling assembly that is very flexible, that is, able to shape packages of different formats, and therefore is flexible with respect to the format change operation.

Another purpose of the present invention is to provide a robotized handling assembly that is able to shape a flattened package by acting indifferently from one or the other of the edges of the parallelogram that defines it.

Another purpose of the present invention is to provide a robotized handling assembly that is very versatile, able to shape a package and also perform other operations of handling, orienting, positioning, and releasing objects.

Yet another purpose is to provide a robotized handling assembly that is versatile also from the point of view of the variety of objects that it can handle, grasp, rotate, position, move, not only packages, but also other objects, such as containers in general, or accessories intended to form or make up a final packaged product, such as for example the information leaflets of drug packages or other.

The Applicant has devised, tested and embodied the present invention to overcome the shortcomings of the state of the art and to obtain these and other purposes and advantages.

### SUMMARY OF THE INVENTION

The present invention is set forth and characterized in the independent claims.

The dependent claims describe other characteristics of the present invention or variants to the main inventive idea.

In accordance with the above purposes, a robotized handling assembly for handling a package starting from a piece of flattened cardboard comprises an automated handling head and an attachment mandrel.

The handling head comprises a jaw unit provided with two opposite handling jaws, and each jaw comprises a support body. The handling head comprises at least one lever which is associated with the support body of at least one of the two jaws, and is configured to rotate for shaping the package.

Furthermore, the handling head comprises at least one suction gripping member cooperating with the at least one lever for picking up and holding the piece of flattened cardboard while the at least one lever, by rotating, shapes the package.

The handling head also comprises means to move each support body in order to move the support bodies with respect to each other in a direction of movement, so as to adjust the reciprocal distance of the respective handling jaws in order to adapt it to the shape and/or size of the piece of flattened cardboard.

The suction gripping member as above is associated with the support body of at least one of the two jaws so as to be moved by the movement means.

The attachment mandrel has a proximal end able to be connected to a robotized arm of an automated operator, and a distal end connected in a stable and selectively removable manner to the automated handling head.

In accordance with one variant, the handling head comprises the jaw unit provided with the at least two opposite handling jaws as above, of which one jaw is equipped with two levers, while the other jaws is equipped with one lever. In this variant, the suction gripping members are positioned adjacent to the levers in each jaw.

Embodiments of the present invention also concern a method to make a package starting from a flattened piece of cardboard with the handling assembly as above. The method provides the following steps:
- preparing a jaw unit provided with two opposite handling jaws, each jaw comprising a support body;
- moving each support body with respect to the other support body in a direction of movement so as to adjust the reciprocal distance of the respective handling jaws, in order to adapt it to the shape and/or size of the flattened piece of cardboard;
- picking up and holding the piece of cardboard by means of one or more suction gripping members;
- making the one or more suction gripping members cooperate with at least one lever, so that the at least one suction gripping member picks up and holds the piece of flattened cardboard while the at least one lever shapes the package by rotating;
- creating the package by driving into rotation the levers associated with the support bodies of the jaws, wherein at least one lever rotates from a position of non-use in which the lever is substantially parallel to a lying plane of the flattened piece of cardboard held by the one or more suction gripping members as above, to a gripping position in which the lever, while the one or more suction gripping members are kept active to hold the piece of flattened cardboard in position, is rotated, substantially orthogonal to the lying plane in order to thrust an articulation edge of the flattened piece of cardboard, causing the package to be shaped in a three-dimensional configuration. According to one embodiment, the step of creating the package provides that the lever of one of the two jaws is maintained fixed in the gripping position, in order to act as an opposite abutment striker.

In accordance with one characteristic aspect of the method according to the present invention, the one or more suction gripping members are associated with the support body of at least one of the two jaws so that the movement of the jaws entails the simultaneous movement of the suction gripping member.

Embodiments of the present invention also concern an automated operator having a body to which at least one robotized articulated arm is connected, equipped with a robotized handling assembly in accordance with the present description.

### BRIEF DESCRIPTION OF THE DRAWINGS

These and other aspects, characteristics and advantages of the present invention will become apparent from the following description of some embodiments, given as a non-restrictive example with reference to the attached drawings wherein:
- fig. 1 shows an automated operator with robotized arms each equipped, with respect to a terminal end thereof, with a robotized handling assembly in accordance with the present invention;
- fig. 2 shows a perspective view of a robotized handling assembly in accordance with the present invention;
- fig. 3 shows a lateral elevation view of fig. 2;
- fig. 4 shows another lateral elevation view of fig. 2;
- fig. 5 shows a perspective view of the handling head of the handling assembly of fig. 2;
- fig. 6 shows a lateral elevation view of fig. 5;
- fig. 7 shows a section view of a part of fig. 3;
- fig. 8 is a view in separated parts of the robotized handling assembly in accordance with the present invention;
- figs. 9-11 show a possible operating sequence of shaping a package with the handling assembly of fig. 2.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

We will now refer in detail to the various embodiments of the present invention, of which one or more examples are shown in the attached drawings. Each example is supplied by way of illustration of the invention and shall not be understood as a limitation thereof. For example, the characteristics shown or described insomuch as they are part of one embodiment can be adopted on, or in association with, other embodiments to produce another embodiment. It is understood that the present invention shall include all such modifications and variants, within the scope of the appended claims.

Before describing these embodiments, we must also clarify that the present description is not limited in its application to details of the construction and disposition of the components as described in the following description using the attached drawings. The present description can provide other embodiments and can be obtained or executed in various other ways. We must also clarify that the phraseology and terminology used here is for the purposes of description only, and cannot be considered as limitative.

Embodiments described using the attached drawings concern a robotized handling assembly for handling objects 100, indicated as a whole with reference number 10 in the attached drawings.

In this specific case, the objects 100 can be by way of example containers, blanks, packages, pharmaceutical articles or products such as blisters, sachets, bags, vials, bottles, syringes, needles.

In particular, the robotized handling assembly 10 is configured to shape a package, or blank, or piece of cardboard 110 which is initially in a flattened or semi-flattened configuration. A package 110 can comprise walls connected to each other so as to form an articulated parallelogram which can pass from two to three dimensions when a thrust is applied to one of the articulation edges, determining the rotation of the parallelogram until it assumes a substantially parallelepiped configuration.

The robotized handling assembly 10 for handling objects 100 comprises an automated handling head 11 and an attachment mandrel 12.

According to one embodiment described here with reference to the attached drawings, the handling head 11 comprises a jaw unit 13 provided with two opposite handling jaws 14, 15, each comprising a support body 65.

The handling head 11 has at least one lever 16 associated with the support body 65 of at least one of the two jaws 14, 15 and able to be driven into rotation, for example by means of a pneumatic drive, in order to handle the objects 100.

The handling head 11 also comprises movement means 17 configured to move each support body 65, in order to move the support bodies with respect to each other in a direction of movement, so as to adjust the reciprocal distance of the respective handling jaws 14, 15, in order to adapt it to the shape and/or size of the flattened piece of cardboard.

The handling head 11 also comprises one or more suction gripping members 22 which cooperate with the levers 16 for handling the objects 100.

The suction gripping member 22 is associated with the support body 65 of at least one of the two jaws 14, 15 so as to be moved by the movement means 17.

The attachment mandrel 12 has a proximal end 18 able to be connected to a robotized arm of an automated operator 200, and a distal end 19 connected in a stable and selectively removable manner to the automated handling head 11.

In accordance with one aspect of the present invention, the levers 16 and the suction gripping members 22 are pneumatically driven by means of respective branches or channels of a pneumatic drive circuit 21.

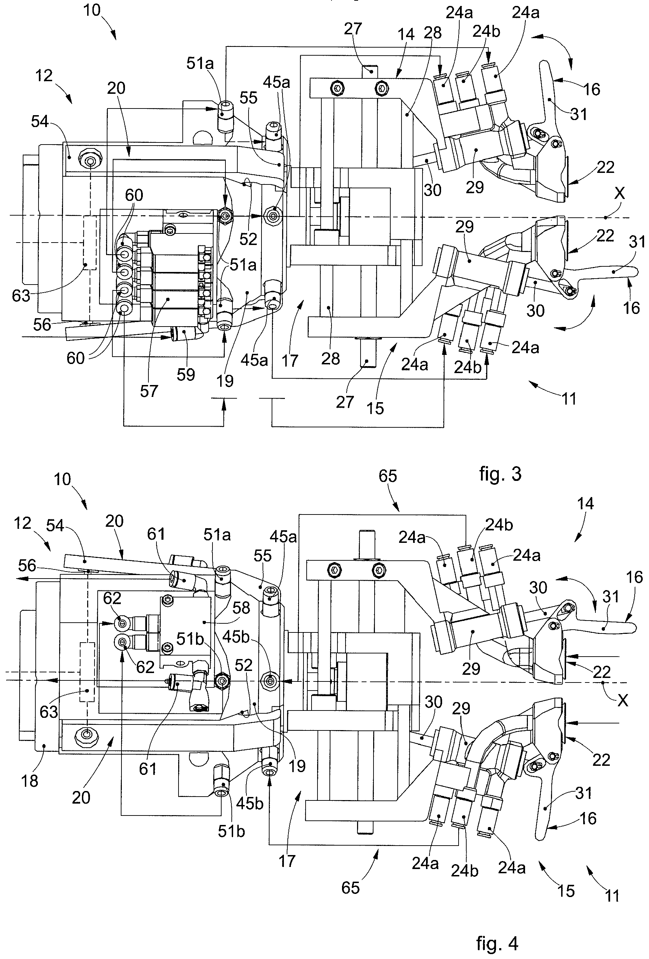

In accordance with example embodiments, shown in figs. 4-5, the support body 65 of each jaw 14, 15 can comprise a support bracket 23 having a prevalent development in the direction of an operating axis X, connecting the attachment mandrel 12 and the handling head 11, and provided with a pivot portion 25 suitable to cooperate with the movement means 17 to adjust the reciprocal distance of the jaws 14, 15.

The movement means 17 comprise at least one threaded pin 27 for transmitting motion along a movement axis Y, parallel to the direction of movement of the support bodies 65, and at least one guide pin 28 which allows to stabilize the movement of the jaws 14, 15 during their movement.

In particular, the pivot portion 25 is equipped with holes 26 which allow the passage of the threaded pin 27 for transmitting motion along the movement axis Y, which extends orthogonal with respect to the operating axis X, and of the guide pins 28.

At least one fluid chamber 29 is connected to the support bracket 23, in which a plunger 30 is slidingly operative and associated with the at least one lever 16 of the handling jaw 14, 15.

The fluid chamber 29 is fed by connectors 24a which allow to convey inside it the operating fluid of the pneumatic drive circuit 21.

The plunger 30 is pivoted to the lever 16, with respect to an upper end 33 thereof so as to allow its rotation. For this purpose, the lever 16 is also pivoted to the jaw 14, 15 with respect to another pivot point which allows it to act as the fulcrum of the lever 16 during the rotation.

According to one aspect of the present invention, each lever 16 is configured to rotate, independently of the others, from at least one position of non-use in which the lever 16 is substantially orthogonal to the operating axis X, to at least one gripping position, in which the lever 16 is substantially parallel to the operating axis X. This allows to regulate the holding action both with respect to the intensity and also the precision with which an object 100 is gripped. Furthermore, as will be better described below, the rotation of the levers 16 of the jaw 14 or of the jaw 15 from the position of non-use to the gripping position allows, in cooperation with the suction gripping members 22, to shape a package 110.

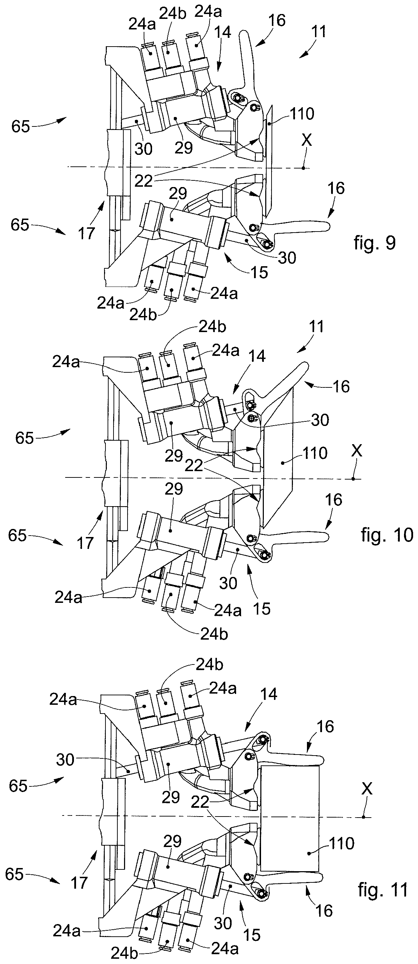

In accordance with the embodiment described here, the levers 16 have an elongated and tapered conformation, and have a pivot zone with respect to which they are pivoted to the plunger 30 and to the jaw 14, 15, and a holding portion 31 provided with a corresponding holding surface which, when the lever is in the gripping position, is in contact with the object 100 to be held, as shown in fig. 11.

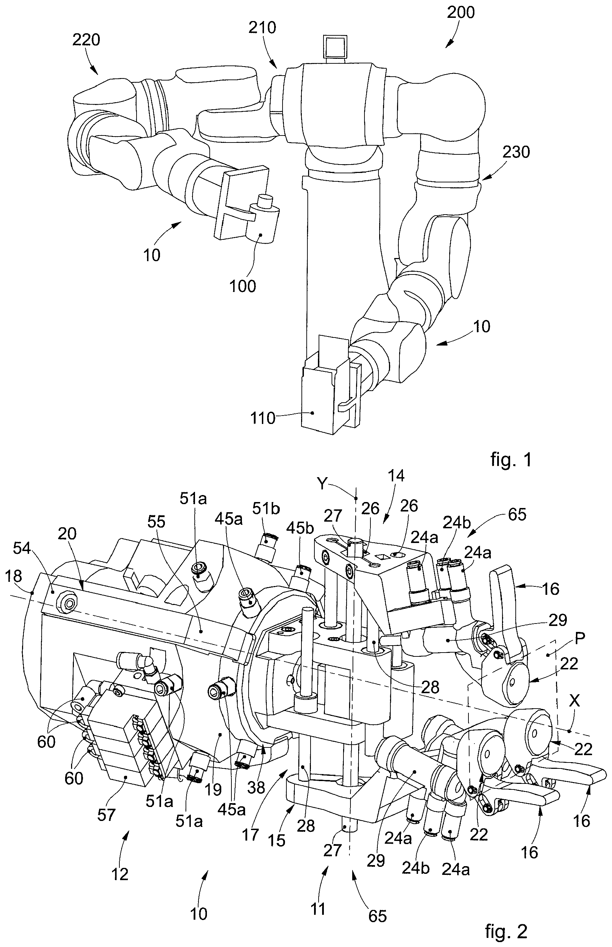

In accordance with a preferred embodiment, shown for example in fig. 2, the jaw unit 13 is provided with the jaws 14, 15, one of which is equipped with two levers 16 and the other one of which is equipped with one lever 16, wherein each jaw 14, 15 is provided with the suction gripping members 22 positioned adjacent to the levers 16.

According to one embodiment, at least one of the jaws 14, 15 is equipped with a pair of levers 16 and a pair of suction gripping members 22.

In accordance with possible embodiments, shown in figs. 4-5, each suction gripping member 22 can be stably connected to the bracket 23 or to the fluid chamber 29.

In accordance with possible embodiments, the suction gripping members 22 are advantageously cup-shaped and can be made of rubber material to more easily adhere to the smooth surfaces of the objects 100, especially of a package 110.

The suction gripping members 22 are coplanar and thus define a gripping plane P, indicated by the dotted line in fig. 2, on which the object 100 is held during its handling.

To increase the gripping efficiency on the objects 100, each suction gripping member 22 is provided with an aperture 34 by means of which, through the pneumatic drive circuit 21, a depression is generated to attract and hold the objects 100 on the gripping plane P. In particular, the suction gripping members are connected to the drive circuit 21 by means of connectors 24b.

For this purpose, the suction gripping members 22 cooperate with the levers 16 holding the object 100 in position, while the levers 16, by rotating, perform a holding action and/or other operating sequences on the object 100, for example an operating sequence to shape a package 110. In this case, the suction gripping members 22 can pick up the package 110, for example from a feed line thereof, providing to hold it while the levers 16, by rotating, provide to shape it, as will be better explained below.

In accordance with the embodiments shown in figs. 4-5, the movement means 17 comprise a pair of support frames 37 suitable to support a transmission unit 35 and the threaded pins 27 and guide pins 28.

The transmission unit 35 is connected in the direction of the operating axis X to a drive shaft 36, and in the direction orthogonal to the operating axis X to the threaded pins 27.

In accordance with possible solutions, the transmission unit 35 comprises bevel gears that allow the transmission of the rotary movement from the direction of the operating axis X to the direction orthogonal to the operating axis X.

In particular, the drive shaft 36, by means of the transmission unit 35, allows the rotation of the threaded pin 27 which, cooperating with the jaw 14, 15, allows it to be moved away from/toward the operating axis X for the suitable adjustments based on the format of the object 100.

In this way, the robotized handling assembly 10 is extremely flexible since a simple movement of the support body 65 of one jaw 14, 15 away from/toward the support body 65 of the other jaw 15, 14, allows to adjust the distance between the levers 16 and the size of the gripping plane P so as to adapt them to the size of an object 100, in particular a package 110. For brevity, here and throughout the present description when we refer to the relative movement between the jaws 14, 15, we indifferently mention the jaws 14, 15, themselves, or the respective support bodies 65.

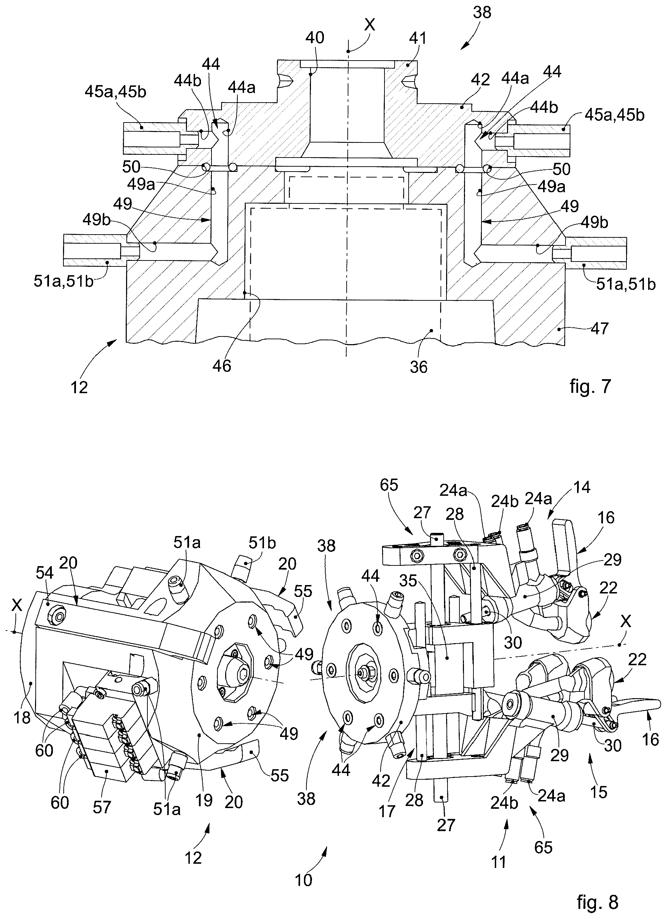

In accordance with some embodiments, the robotized handling assembly 10 is provided with a motor member 48 housed in the attachment mandrel 12, schematically shown in fig. 7 with a dashed line, configured to drive the movement means 17. The motor member 48 can preferably be an electric motor, advantageously of the brushless type.

In accordance with possible solutions, the adjustment of the reciprocal distance between the jaws 14, 15 can be asymmetrical, that is, it is possible to provide that the jaws 14, 15 are not always equidistant from the operating axis X, that is, it is possible to provide the movement of only one of the jaws 14, 15 toward the other jaw 15, 14. In these cases, it is possible to provide more than one motor member which manages the independent movement of the jaws 14, 15.

In accordance with one aspect of the present invention, the attachment mandrel 12 is connected to the handling head 11 mechanically, by means of releasable clamping means 20, and fluidically, by means of channels 49, 44 that define the pneumatic drive circuit 21 and which develop from the attachment mandrel 12 to the handling head 11 in order to drive the levers 16 and the suction gripping members 22.

In particular, the attachment mandrel 12 is mechanically and fluidically connected to the handling head 11 by means of a connection flange 38 which is stably associated with the handling head 11.

The connection flange 38 can be stably associated with the handling head 11 by attachment means 39. In particular, the connection flange 38 is attached to the frames 37 of the movement means 17 by the attachment means 39.

The connection flange 38 is provided with a base 42, with respect to which it is mechanically and fluidly connected to the attachment mandrel 12, and a connection portion 41 that anchors it to the handling head 11.

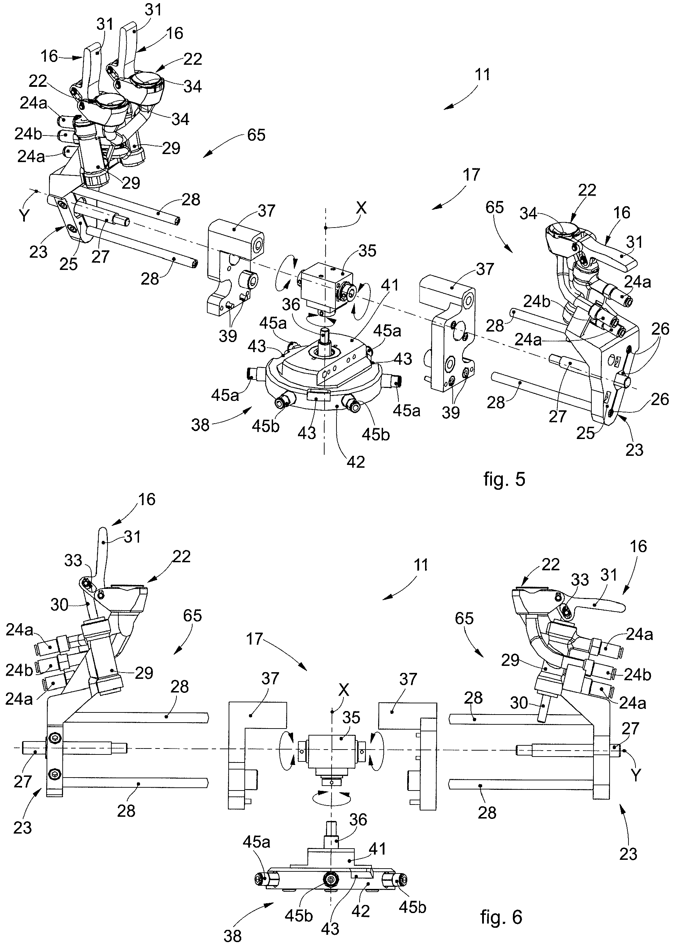

In accordance with the section view shown in fig. 5, the connection flange 38 is provided with channels 44 in fluidic communication with the channels 49 present on the attachment mandrel 12 for the passage of the operating fluid relating to the control of the levers 16, shown by way of example in fig. 3 with discontinuous line arrows, and for the passage of the operating fluid relating to the control of the suction gripping members 22, shown by way of example in fig. 4 with discontinuous line arrows.

Advantageously, the channels 44 and the channels 49 are aligned with each other and sealing elements 50 can be present in the junction zones in order to prevent the leakage of operating fluid from the pneumatic drive circuit 21. In particular, the channel 44 comprises a first portion 44a parallel to the operating axis X, and a second portion 44b orthogonal to the operating axis X, exiting in a radial direction from the external peripheral surface of the base 42 of the connection flange 39 through connectors 45a, 45b. The channel 49 comprises a first portion 49a parallel to the operating axis X, and a second portion 49b orthogonal to the operating axis X, entering in a radial direction from the external peripheral surface of the attachment mandrel 12 through connectors 51a, 51b, as will be described in more detail below.

The base 42 can advantageously have a substantially cylindrical shape and is provided on its external peripheral surface with attachment throats 43 for the mechanical connection with the releasable clamping means 20.

In accordance with the embodiments shown in figs. 2-4, the attachment throats 43 are equally spaced on the external peripheral surface of the base 42 and are conformed to cooperate with the releasable clamping means 20 which are connected to the attachment mandrel 12 and configured to exert a selective and adjustable holding action on the connection flange 38.

The connection flange 38 is also provided with a central hole 40 through in the direction of the operating axis X, through which the drive shaft 36 is connected in rotation with the motor member 48, schematically shown in fig. 7 with a dashed line.

The fluidic and mechanical connection between the handling head 11 and the attachment mandrel 12 by means of the connection flange 39 allows to associate the handling head 11 with the attachment mandrel 12 in a very quick and efficient manner, since it is not necessary to remove or apply connection cables and/or pipes. This also makes it possible to quickly replace the handling head 11 if it is necessary to replace it and/or for maintenance interventions.

In accordance with the embodiments shown in figs. 2-4, the attachment mandrel 12 is provided with a main body 47 inside which there is a compartment 46 configured to house at least the motor member 48 which drives the movement means 17 and all the wiring connected to it.

The main body 47 is stably connected with respect to the proximal end 18 to the automated operator 200, and with respect to the distal end 19 to the handling head 11 by means of the connection flange 38.

The main body 47 is equipped with the releasable clamping means 20 which are positioned in longitudinal grooves 52 made on the external surface of the main body 47.

The grooves 52 are configured to house, at least partly, the releasable clamping means 20 and to allow their rotation in order to exercise the holding action on the connection flange 38.

The releasable clamping means 20 comprise holding levers 53 having longitudinal extension parallel to the operating axis X and provided with a first end 54 and a second end 55, wherein the first end 54 is mobile in a direction orthogonal to the operating axis X by means of rods 56, and wherein the second end 55 cooperates mechanically with the attachment throats 46 of the connection flange 38 in order to exert a holding action on it.

In accordance with possible solutions, the rods 56 are connected to a pneumatic drive unit 63 positioned in the internal compartment 46, in correspondence with the proximal end 18.

In particular, the pneumatic drive unit 63 allows to adjust the movement of the rods 56 and therefore the holding pressure that the second ends 55 of the holding levers 53 exert on the attachment throats 46 of the connection flange 38.

The attachment mandrel 12 is provided, advantageously on the external surface, with at least a pair of flow regulation devices 57, 58 which allow to control the pressure and/or the flow rate of the operating fluid of the pneumatic drive circuit 21. In particular, the flow regulating device 57 allows to regulate the operating fluid which controls the rotation of the levers 16. The flow regulating device 58 allows to regulate the operating fluid which controls the functionality of the suction gripping members 22.

The flow regulation device 57 comprises at least one inlet connection 59 from which the operating fluid to be regulated under pressure comes, and outlet connections 60 which convey the regulated operating fluid toward the connectors 51a through means to transport the fluid, for example pipes or conduits shown by way of example in fig. 3 with continuous arrows.

The flow regulation device 57 allows to adjust the rotation of the levers 16 of the jaw 14 with respect to the levers 16 of the jaw 15 in an independent manner.

In this way, when the at least one lever 16 of the jaw 14 is in the position of non-use, the at least one lever 16 of the jaw 15 can be in the gripping position, or vice versa, or in intermediate positions.

This, advantageously, allows to carry out the rotation movement to shape the box both with the levers 16 of the jaw 14 while the levers 16 of the jaw 15 act as a fixed abutment, and also with the levers 16 of the jaw 15 while the levers 16 of the jaw 14 act as a fixed abutment. In this way, the robotized handling assembly 10 is able to shape a package 110 by acting indifferently from one or the other of the edges of the parallelogram that defines it.

In possible solutions, it is possible to provide to adjust the rotation of each of the levers 16 of the jaw 14 and of each of the levers 16 of the jaw 15 in an independent manner. In this way, it is possible to carry out operating sequences which comprise a step of gripping or partial release of an object 100, or steps which provide reciprocal and determinate positioning of parts of the object 100.

According to possible solutions, it is possible to provide at least one inlet connection 59 configured to convey the operating fluid for the control in rotation of the levers 16 of the jaws 14, 15.

In accordance with possible solutions, the operating fluid entering the connection 59 can come from an industrial line of compressed air, or a dedicated compressor.

The flow regulation device 58, on the other hand, comprises at least one outlet connection 61 from which the operating fluid that was sucked in is discharged, and inlet connections 62 which convey the operating fluid coming from the connectors 51b through means to transport fluid, for example pipes or conduits shown by way of example in fig. 4 with continuous arrows.

The flow regulation device 58 allows to adjust the suction intensity of the suction gripping members 22 of the jaw 14 with respect to the suction intensity of the suction gripping members 22 of the jaw 15 in an independent manner.

In accordance with possible solutions, it is possible to provide at least two outlet connections 61, each of which is configured to discharge the operating fluid coming from the suction gripping members 22 mounted on the jaws 14, 15.

In accordance with possible solutions, the operating fluid that was sucked in exiting from the connection 61 can be supplied by an industrial line of air in depression, or under vacuum, or by a vacuum pump.

In accordance with possible solutions, the flow regulation devices 57, 58 can be or include valves, advantageously electrically controlled valves, that is, solenoid valves.

Advantageously, providing the motor member 48 in the attachment mandrel 12, as well as the flow regulation devices 57, 58, the pneumatic drive unit 63 for the releasable clamping means 20, the attachment mandrel 12 is the component of the robotized handling assembly 10 that is designated to provide the electric connections, wiring and drives, as well as advantageously also the pneumatic wiring, for the clamping and functioning of the handling head 11. The latter, therefore, can be easily dismantled with respect to the attachment mandrel 12 for the most diverse needs, such as maintenance, replacement, repair, format change or other, while keeping the attachment mandrel 12 connected to the respective robotized articulated arm 220, 230. This is advantageous, since it does not interrupt the electric wiring, the sliding electric contacts and other electric connections, as well as the pneumatic connection in place between the attachment mandrel 12 and respective robotized articulated arm 220, 230. Consequently, after having disconnected the handling head 11 from the attachment mandrel 12, releasing the releasable clamping means 20, the same or a similar handling head 11, suitably prepared, can be easily reconnected to the attachment mandrel 12, aligning the respective channels 49, 44 (see for example fig. 8), thus connecting the pneumatic drive circuit 21, and the drive shaft 36 associated on one side with the transmission unit 35 on the handling head 11, and on the other side with the motor member 48 provided in the attachment mandrel 12, restoring the functionality and operation of the handling head 11 in an easy and rapid manner.

In accordance with a possible variant, the robotized handling assembly 10 for handling objects 100 comprises the automated handling head 11 and the attachment mandrel 12.

The handling head 11 comprises the jaw unit 13 provided with the at least two opposite handling jaws 14, 15, of which one jaw 14, 15 is equipped with at least one lever 16 able to be pneumatically driven into rotation and at least one suction gripping member 22, the other jaw 15, 14 is equipped with at least one suction gripping member 22 for the purpose of handling the objects 100.

The handling head 11 also comprises the movement means 17 configured to selectively move said jaws 14, 15 with respect to each other so as to selectively adjust the reciprocal distance in order to adapt the handling of the objects 100 based on their shape and/or size.

The attachment mandrel 12 has the proximal end 18 able to be connected to a robotized arm of an automated operator 200 and the distal end 19 connected in a stable and selectively removable manner to the automated handling head 11, in the direction of the operating axis X.

Embodiments of the present invention, shown in fig. 1, concern an automated operator 200 having a body 210 to which at least one robotized articulated arm 220, 230 is connected, equipped with a robotized handling assembly 10 in accordance with the present description. In the example described using fig. 1, the automated operator 200 has a pair of robotized articulated arms 220, 230 connected to the body 210, each provided with a respective robotized handling assembly 10.

Embodiments of the present invention also concern a method to shape a package 110 in the form of a flattened blank or piece of cardboard. The method provides to:
- prepare a jaw unit 13 provided with two opposite handling jaws 14, 15, each jaw comprising a support body 65;
- move each support body 65 with respect to the other support body 65 in a direction of movement, so as to adjust the reciprocal distance of the respective handling jaws 14, 15, to adapt it to the shape and/or size of the flattened piece of cardboard;
- pick up and hold the piece of cardboard by means of one or more suction gripping members 22, fig. 9;
- create the package 110 by driving into rotation the levers 16 associated with the support bodies 65 of the jaws 14, 15, wherein at least one lever 16 rotates from a position of non-use, in which the lever 16 is substantially parallel to a lying plane of the flattened piece of cardboard held by the one or more suction gripping

members 22, to a gripping position, in which the lever 16, while the one or more suction gripping members 22 are kept active to hold the piece of cardboard in position, is rotated, substantially orthogonal to the lying plane to thrust an articulation edge of the piece of cardboard so as to cause the package 110 to be shaped in a three-dimensional configuration.

According to one embodiment, the step of creating the package 110 provides that the lever 16 of one of the two jaws 14, 15 is kept fixed in the gripping position to act as an opposite abutment striker.

The method according to the present invention provides that the one or more suction gripping members 22 are associated with the support body 65 of at least one of the two jaws 14, 15 so that the movement of the jaws entails the simultaneous movement of the suction gripping member 22.

In accordance with one aspect of the present invention, the method provides a step of adjusting the jaws 14, 15 to selectively adjust their reciprocal distance in order to adapt the handling of the package 110 based on its shape and/or size.

As shown in fig. 9, the package 110 is initially in a flattened configuration which, in a lateral view, has the profile of a parallelogram. In this configuration and orientation, the package has to necessarily be shaped with the levers 16 of the jaw 14. In the event the package 110 is instead picked up and held in a configuration and orientation symmetrical with respect to the case shown, the package 110 has to necessarily be shaped with the levers 16 of the jaw 15.

The fact that, depending on the orientation and configuration of the package 110, the robotized handling assembly 10 still manages to shape it makes the robotized handling assembly 10 extremely versatile and flexible.

It is clear that modifications and/or additions of parts may be made to the robotized handling assembly as described heretofore, without departing from the field and scope of the present invention, as defined by the appended claims.

It is also clear that, although the present invention has been described with reference to some specific examples, a person of skill in the art shall certainly be able to achieve many other equivalent forms of robotized handling assembly, having the characteristics as set forth in the claims and hence all coming within the field of protection defined thereby.

In the following claims, the sole purpose of the references in brackets is to facilitate reading: they must not be considered as restrictive factors with regard to the field of protection claimed in the specific claims.

## Claims

1. Robotized handling assembly for making a package (110) starting from a piece of flattened cardboard, comprising an automated handling head (11) having:
- a jaw unit (13) provided with two opposite handling jaws (14, 15), each jaw comprising a support body (65);
- at least one lever (16) associated with said support body (65) of at least one of the two jaws (14, 15), said lever (16) being configured to rotate for shaping said package (110);
- at least one suction gripping member (22) cooperating with said at least one lever (16) for picking up and holding said piece of flattened cardboard while said at least one lever (16), by rotating, shapes said package (110);
- movement means (17) configured to move each support body (65), with the purpose of moving the support bodies with respect to each other in a direction of movement, so as to adjust the reciprocal distance of the respective handling jaws (14, 15) in order to adapt it to the shape and/or size of the piece of flattened cardboard;
wherein said at least one suction gripping member (22) is associated with the support body (65) of at least one of the two jaws (14, 15) so as to be moved by said movement means (17), and wherein said assembly also comprises an attachment mandrel (12) that has a proximal end (18) able to be connected to a robotized arm of an automated operator (200) and a distal end (19) connected in a stable and selectively removable manner to said automated handling head (11).

2. Handling assembly as in claim 1, **characterized in that** one of said jaws (14, 15) is equipped with two levers (16), the other of said jaws (15, 14) is equipped with one lever (16), wherein each jaw (14, 15) is provided with suction gripping members (22) that are positioned adjacent to said levers (16).

3. Handling assembly as in claim 1 or 2, **characterized in that** said levers (16) and said suction gripping members (22) are pneumatically driven by respective branches or channels of a pneumatic drive circuit (21).

4. Handling assembly as in claim 3, **characterized in that** said attachment mandrel (12) is connected to said handling head (11) mechanically, by means of releasable clamping means (20), and fluidically, by means of channels (49, 44) that define said pneumatic drive circuit (21) which develops from said attachment mandrel (12) to said handling head (11) in order to drive said levers (16) and said suction gripping members (22).

5. Handling assembly as in claim 3 or 4, **characterized in that** said attachment mandrel (12) is provided with at least one pair of flow regulation devices (57, 58) configured to control the pressure and/or flow rate of the operating fluid that drives said pneumatic drive circuit (21) in order to adjust respectively the levers (16) and the suction gripping members (22).

6. Handling assembly as in any claim hereinbefore, **characterized in that** it is provided with a motor member (48) housed in said attachment mandrel (12) configured to drive said movement means (17).

7. Handling assembly as in any claim hereinbefore, **characterized in that** said movement means (17) comprise at least one threaded pin (27) for transmitting motion along a movement axis (Y) parallel to the direction of movement of the support bodies (65), and at least one guide pin (28) that allows to stabilize the movement of said jaws (14, 15) during their movement.

8. Handling assembly as in claim 1, **characterized in that** at least one of said jaws (14, 15) is equipped with a pair of levers (16) and a pair of said suction gripping members (22).

9. Handling assembly as in any claim hereinbefore, **characterized in that** each lever (16) is configured to rotate, independently from the others, from at least a position of non-use in which the lever (16) is substantially orthogonal to an operating axis (X) connecting said attachment mandrel (12) and said handling head (11), to at least a gripping position, in which the lever (16) is substantially parallel to the operating axis (X).

10. Handling assembly as in claim 9, **characterized in that** said suction gripping members (22) have a gripping plane substantially orthogonal to said operating axis (X).

11. Handling assembly as in any claim hereinbefore, **characterized in that** said movement means (17) are configured to move said jaws (14, 15) asymmetrically, that is, moving only one of said jaws (14, 15), toward or away from the other jaw (15, 14), while the latter is kept stationary.

12. Method to make a package (110) starting from a flattened piece of cardboard, said method providing the following steps:
- preparing a jaw unit (13) provided with two opposite handling jaws (14, 15), each jaw comprising a support body (65);
- moving each support body (65) with respect to the other support body (65) in a direction of movement so as to adjust the reciprocal distance of the respective handling jaws (14, 15), in order to adapt it to the shape and/or size of the flattened piece of cardboard;
- picking up and holding said piece of cardboard by means of one or more suction gripping members (22);
- making the one or more suction gripping members (22) cooperate with at least one lever (16), so that the at least one suction gripping member (22) picks up and holds said piece of flattened cardboard while said at least one lever (16) shapes said package (110) by rotating;
- creating said package (110) by driving into rotation said levers (16) associated with the support bodies (65) of the jaws (14, 15), wherein at least one lever (16) rotates from a position of non-use in which the lever (16) is substantially parallel to a lying plane of the flattened piece of cardboard held by said one or more suction gripping members (22), to a gripping position in which the lever (16), while said one or more suction gripping members (22) are kept active to hold said piece of cardboard in position, is rotated, substantially orthogonal to said lying plane in order to thrust an articulation edge of said piece of cardboard, causing the package (110) to be shaped in a three-dimensional configuration;
wherein said one or more suction gripping members (22) are associated with the support body (65) of at least one of the two jaws (14, 15) so that the movement of the jaws entails the simultaneous movement of the suction gripping member.

13. Method as in claim 12, **characterized in that** said step of creating said package (110) provides that the lever (16) of one of the two jaws (15, 14) is kept fixed in the gripping position to act as an opposite abutment striker.

14. Automated operator having a body (210) to which at least one robotized articulated arm (220, 230) is connected, equipped with a robotized handling assembly (10) as in any of the claims from 1 to 11.

## Patentansprüche

1. Computergesteuerte Hantiervorrichtung zum Herstellen einer Verpackung (110) ausgehend von einem Stück flachen Karton, aufweisend einen automatisierten Hantierkopf (11), der aufweist:
- eine Klaueneinheit (13), die mit zwei gegenüberliegenden Hantierklauen (14, 15) versehen ist, wobei jede Klaue einen Haltekörper (65) aufweist,
- wenigstens einen Hebel (16), der mit dem Haltekörper (65) wenigstens einer der beiden Klauen (14, 15) verbunden ist, wobei der Hebel (16) eingerichtet ist, um zu rotieren zum Formen der Verpackung (110),
- wenigstens ein Sauggreifelement (22), das mit dem wenigstens einen Hebel (16) zusammenwirkt zum Aufnehmen und Halten des Stücks flachen Karton während der wenigstens eine Hebel (16) durch Rotieren die Verpackung (110) formt,
- Bewegungsmittel (17), die eingerichtet sind, um jeden Haltekörper (65) zu bewegen, mit dem Zweck des Bewegens der Haltekörper bezüglich einander in eine Bewegungsrichtung, um so den gegenseitigen Abstand der jeweiligen Hantierklauen (14, 15) einzustellen, um ihn an die Form und/oder die Größe des Stücks flachen Karton anzupassen,
wobei das wenigstens eine Sauggreifelement (22) mit dem Haltekörper (65) wenigstens einer der beiden Klauen (14, 15) verbunden ist, um so von den Bewegungsmitteln (17) bewegt zu werden, und wobei die Vorrichtung ferner ein Befestigungsfutter (12) aufweist, das ein proximales Ende (18), das imstande ist, mit einem Roboterarm eines automatisierten Operators (200) verbunden zu werden, und ein distales End (19) hat, das in einer stabilen und selektiv abnehmbaren Weise mit dem automatisierten Hantierkopf (11) verbunden ist.

2. Hantiervorrichtung gemäß Anspruch 1, **dadurch gekennzeichnet, dass** eine der Klauen (14, 15) mit zwei Hebeln (16) ausgestattet ist, die andere der Klauen (15, 14) mit genau einem Hebel (16) ausgestattet ist, wobei jede Klaue (14, 15) mit Sauggreifelementen (22) versehen ist, die benachbart zu den Hebeln (16) positioniert sind.

3. Hantiervorrichtung gemäß Anspruch 1 oder 2, **dadurch gekennzeichnet, dass** die Hebel (16) und die Sauggreifelemente (22) pneumatisch angetrieben sind durch jeweilige Zweige oder Kanäle eines Pneumatik-Antriebskreises (21).

4. Hantiervorrichtung gemäß Anspruch 3, **dadurch gekennzeichnet, dass** das Befestigungsfutter (12) mit dem Hantierkopf (11) verbunden ist mechanisch mittels lösbarer Klemmmittel (20) und strömungstechnisch mittels Kanälen (49, 44), die den Pneumatik-Antriebskreis (21) definieren, welcher sich von dem Befestigungsfutter (12) aus zu dem Hantierkopf (11) erstreckt, um die Hebel (16) und die Sauggreifelemente (22) anzutreiben.

5. Hantiervorrichtung gemäß Anspruch 3 oder 4, **dadurch gekennzeichnet, dass** das Befestigungsfutter (12) mit wenigstens einem Paar Flussreguliervorrichtungen (57, 58) versehen ist, die eingerichtet sind, um den Druck und/oder die Flussrate des Arbeitsfluid zu steuern, das den Pneumatik-Antriebskreis (21) antreibt, um jeweils die Hebel (16) und die Sauggreifelemente (22) einzustellen.

6. Hantiervorrichtung gemäß irgendeinem vorigen Anspruch, **dadurch gekennzeichnet, dass** es mit einem Motorelement (48) versehen ist, das in dem Befestigungsfutter (12) untergebracht ist und eingerichtet ist, um die Bewegungsmittel (17) anzutreiben.

7. Hantiervorrichtung gemäß irgendeinem vorigen Anspruch, **dadurch gekennzeichnet, dass** die Bewegungsmittel (17) aufweisen wenigstens einen Gewindestift (27) zum Übertragen von Bewegung entlang einer Bewegungsachse (Y) parallel zur Bewegungsrichtung der Haltekörper (65) und wenigstens einen Führungsstift (28), der ermöglicht, die Bewegung der Klauen (14, 15) während deren Bewegung zu stabilisieren.

8. Hantiervorrichtung gemäß Anspruch 1, **dadurch gekennzeichnet, dass** wenigstens eine der Klauen (14, 15) ausgestattet ist mit einem Paar Hebel (16) und einem Paar Sauggreifelementen (22).

9. Hantiervorrichtung gemäß irgendeinem vorigen Anspruch, **dadurch gekennzeichnet, dass** jeder Hebel (16) eingerichtet ist, um unabhängig von den anderen zu rotieren von wenigstens einer Nichtbenutzungs-Position aus, in welcher der Hebel (16) im Wesentlichen orthogonal zu einer Arbeitsachse (X) ist, die das Befestigungsfutter (12) und den Hantierkopf (11) verbindet, zu wenigstens einer Greifposition, in welcher der Hebel (16) im Wesentlichen parallel zu der Arbeitsachse (X) ist.

10. Hantiervorrichtung gemäß Anspruch 9, **dadurch gekennzeichnet, dass** die Sauggreifelemente (22) eine Greifebene haben, die im Wesentlichen orthogonal zu der Arbeitsachse (X) ist.

11. Hantiervorrichtung gemäß irgendeinem vorigen Anspruch, **dadurch gekennzeichnet, dass** die Bewegungsmittel (17) eingerichtet sind, um die Klauen (14, 15) asymmetrisch zu bewegen, das heißt bewegend nur eine der Klauen (14, 15) zu der anderen Klaue (15, 14) hin oder von dieser weg, während die Letztere stationär gehalten wird.

12. Verfahren zum Herstellen einer Verpackung (110) ausgehend von einem flachen Stück Karton, wobei das Verfahren die folgenden Schritte bereitstellt:
- Vorbereiten einer Klaueneinheit (13), die mit zwei gegenüberliegenden Hantierklauen (14, 15) bereitgesellt ist, wobei jede Klaue einen Haltekörper (65) aufweist,
- Bewegen jedes Haltekörpers (65) bezüglich des anderen Haltekörpers (65) in einer Bewegungsrichtung, um den gegenseitigen Abstand der jeweiligen Hantierklauen (14, 15) einzustellen, um ihn an die Form und/oder die Größe des flachen Stücks Karton anzupassen,
- Aufnehmen und Halten des Stücks Karton mittels einer oder mehrerer Sauggreifelemente (22),
- Veranlassen des einen oder der mehreren Sauggreifelemente (22) mit wenigstens einem Hebel (16) zusammenzuwirken, so dass das wenigstens eine Sauggreifelement (22) das Stück flachen Karton aufnimmt und hält, während der wenigstens eine Hebel (16) die Verpackung (110) formt durch Rotieren,
- Erzeugen der Verpackung (110) durch Drehantreiben der Hebel (16), die mit den Haltekörpern (65) der Klauen (14, 15) verbunden sind, wobei wenigstens ein Hebel (16) rotiert von einer Nichtbenutzungs-Position aus, in welcher der Hebel (16) im Wesentlichen parallel zu einer Liegeebene des flachen Stücks Karton ist, das von dem einen oder den mehreren Sauggreifelementen (22) gehalten wird, zu einer Greifposition, in welcher der Hebel (16), während das eine oder die mehreren Sauggreifelemente (22) aktiv gehalten werden, um das Stück Karton in Position zu halten, im Wesentlichen orthogonal zu der Liegeebene rotiert ist, um eine Gelenkkante des Stücks Karton einzutreiben, bewirkend, dass die Verpackung (110) in einer dreidimensionalen Konfiguration geformt wird, wobei das eine oder die mehreren Sauggreifelemente (22) mit dem Haltekörper (65) wenigstens einer der beiden Klauen (14, 15) verbunden sind, so dass die Bewegung der Klauen die simultane Bewegung des Sauggreifelements bewirkt.

13. Verfahren gemäß Anspruch 12, **dadurch gekennzeichnet, dass** der Schritt des Erzeugens der Verpackung (110) bereitstellt, dass der Hebel (16) einer der beiden Klauen (15, 14) fest in der Greifposition gehalten wird, um als ein Gegenanschlagbügel zu wirken.

14. Automatisierter Operator, der einen Körper (210) hat, mit welchem wenigstens ein Robotergelenkarm (220, 230) verbunden ist, der mit einer computergesteuerten Hantiervorrichtung (10) gemäß irgendeinem der Ansprüche 1 bis 11 versehen ist.

## Revendications

1. Ensemble robotisé de manipulation pour réaliser un emballage (110) à partir d'une pièce de carton aplatie, comprenant une tête de manipulation automatisée (11) comprenant :
- une unité (13) à mâchoires dotée de deux mâchoires de manipulation (14, 15) opposées, chaque mâchoire comprenant un corps de support (65) ;
- au moins un levier (16) associé audit corps de support (65) d'au moins une des deux mâchoires (14, 15), ledit levier (16) étant configuré pour tourner de façon à mettre en forme ledit emballage (110) ;
- au moins un organe (22) de préhension par aspiration coopérant avec ledit au moins un levier (16) pour saisir et maintenir ladite pièce de carton aplatie pendant que ledit au moins un levier (16), en tournant, façonne ledit emballage (110) ;
- des moyens de déplacement (17) configurés pour déplacer chaque corps de support (65), dans le but de déplacer les corps de support l'un par rapport à l'autre dans une direction de mouvement, de manière à ajuster la distance réciproque des mâchoires de manipulation (14, 15) respectives afin de l'adapter à la forme et/ou à la taille de la pièce de carton aplatie ;
ledit au moins un organe (22) de préhension par aspiration étant associé au corps de support (65) d'au moins une des deux mâchoires (14, 15) de manière à être déplacé par lesdits moyens de déplacement (17), et ledit ensemble comprenant également un mandrin de fixation (12) qui présente une extrémité proximale (18) apte à être reliée à un bras robotisé d'un opérateur automatisé (200) et une extrémité distale (19) reliée de manière stable et sélectivement amovible à ladite tête de manipulation automatisée (11).

2. Ensemble de manipulation selon la revendication 1, **caractérisé en ce que** l'une desdites mâchoires (14, 15) est équipée de deux leviers (16), l'autre desdites mâchoires (15, 14) est équipée d'un levier (16), chaque mâchoire (14, 15) étant dotée d'organes (22) de préhension par aspiration qui sont positionnés de manière adjacente auxdits leviers (16).

3. Ensemble de manipulation selon la revendication 1 ou la revendication 2, **caractérisé en ce que** lesdits leviers (16) et lesdits organes (22) de préhension par aspiration sont entraînés pneumatiquement par des branches ou canaux respectifs d'un circuit d'entraînement pneumatique (21).

4. Ensemble de manipulation selon la revendication 3, **caractérisé en ce que** ledit mandrin de fixation (12) est relié mécaniquement à ladite tête de manipulation (11), au moyen de moyens de serrage libérables (20), et fluidiquement, au moyen de canaux (49, 44) qui définissent ledit circuit d'entraînement pneumatique (21) qui se développe depuis ledit mandrin de fixation (12) jusqu'à ladite tête de manipulation (11) pour entraîner lesdits leviers (16) et lesdits organes (22) de préhension par aspiration.

5. Ensemble de manipulation selon la revendication 3 ou la revendication 4, **caractérisé en ce que** ledit mandrin de fixation (12) est pourvu d'au moins une paire de dispositifs de régulation de débit (57, 58) configurés pour contrôler la pression et/ou le débit du fluide de travail qui entraîne ledit circuit d'entraînement pneumatique (21) afin de régler respectivement les leviers (16) et les organes (22) de préhension par aspiration.

6. Ensemble de manipulation selon l'une quelconque des revendications précédentes, **caractérisé en ce qu'**il est pourvu d'un organe moteur (48) logé dans ledit mandrin de fixation (12) configuré pour entraîner lesdits moyens de déplacement (17).

7. Ensemble de manipulation selon l'une quelconque des revendications précédentes, **caractérisé en ce que** lesdits moyens de déplacement (17) comprennent au moins une tige filetée (27) pour transmettre le mouvement le long d'un axe de déplacement (Y) parallèle à la direction de déplacement des corps de supports (65), et au moins une broche de guidage (28) qui permet de stabiliser le mouvement desdites mâchoires (14, 15) pendant leur déplacement.

8. Ensemble de manipulation selon la revendication 1, **caractérisé en ce qu'**au moins une desdites mâchoires (14, 15) est équipée d'une paire de leviers (16) et d'une paire desdits organes (22) de préhension par aspiration.

9. Ensemble de manipulation selon l'une quelconque des revendications précédentes, **caractérisé en ce que** chaque levier (16) est configuré pour tourner, indépendamment des autres, à partir d'au moins une position de non-utilisation dans laquelle le levier (16) est sensiblement orthogonal à un axe de fonctionnement (X) reliant ledit mandrin de fixation (12) et ladite tête de manipulation (11), jusqu'à au moins une position de préhension, dans laquelle le levier (16) est sensiblement parallèle à l'axe de fonctionnement (X).

10. Ensemble de manipulation selon la revendication 9, **caractérisé en ce que** lesdits organes (22) de préhension par aspiration présentent un plan de préhension sensiblement orthogonal audit axe de fonctionnement (X).

11. Ensemble de manipulation selon l'une quelconque des revendications précédentes, **caractérisé en ce que** lesdits moyens de déplacement (17) sont configurés pour déplacer lesdites mâchoires (14, 15) de manière asymétrique, c'est-à-dire en rapprochant ou en éloignant une seule desdites mâchoires (14, 15) de l'autre mâchoire (15, 14), tandis que cette dernière est maintenue immobile.

12. Procédé de fabrication d'un emballage (110) à partir d'une pièce de carton aplatie, ledit procédé prévoyant les étapes suivantes :
- préparer une unité (13) à mâchoires dotée de deux mâchoires de manipulation (14, 15) opposées, chaque mâchoire comprenant un corps de support (65) ;
- déplacer chaque corps de support (65) par rapport à l'autre corps de support (65) dans une direction de déplacement de manière à ajuster la distance réciproque des mâchoires de manipulation (14, 15) respectives, afin de l'adapter à la forme et /ou taille de la pièce de carton aplatie ;
- saisir et maintenir ladite pièce de carton au moyen d'un ou plusieurs organes (22) de préhension par aspiration ;
- faire coopérer le ou les organes (22) de préhension par aspiration avec au moins un levier (16), de sorte que ledit au moins un organe de préhension par succion (22) prélève et retient ladite pièce de carton aplatie tandis que ledit au moins un levier (16) façonne ledit emballage (110) par rotation ;
- créer ledit emballage (110) en entraînant en rotation lesdits leviers (16) associés aux corps de supports (65) des mâchoires (14, 15), au moins un levier (16) tournant à partir d'une position de non-utilisation dans laquelle le levier (16) est sensiblement parallèle à un plan d'extension de la pièce de carton aplatie maintenue par lesdits un ou plusieurs organes (22) de préhension par aspiration, jusqu'à une position de préhension dans laquelle le levier (16) tourne sensiblement orthogonalement audit plan d'extension alors que ledit ou lesdits organes (22) de préhension par aspiration sont maintenus actifs de manière à maintenir ladite pièce de carton en position, afin de pousser un bord d'articulation de ladite pièce de carton, provoquant la mise en forme de l'emballage (110) selon une configuration tridimensionnelle ;
lesdits un ou plusieurs organes (22) de préhension par aspiration étant associés au corps de support (65) d'au moins l'une des deux mâchoires (14, 15) de sorte que le mouvement des mâchoires entraîne le mouvement simultané de l'organe de préhension par aspiration.

13. Procédé selon la revendication 12, **caractérisé en ce que** ladite étape de création dudit emballage (110) prévoit que le levier (16) de l'une des deux mâchoires (15, 14) soit maintenu fixe en position de préhension de façon à agir en tant que butée opposée.

14. Opérateur automatisé comportant un corps (210) auquel est relié au moins un bras articulé robotisé (220, 230), équipé d'un ensemble de manipulation robotisé (10) selon l'une quelconque des revendications 1 à 11.
